# FASCICULE DE BREVET EUROPEEN

(11) **EP 1 167 135 B1**
(45) Date de publication et mention de la délivrance du brevet: **28.04.2004**
(21) Numéro de dépôt: 01401607.5
(22) Date de dépôt: 19.06.2001
(51) Int. Cl.: B60R 25/02

(54) **Antivol de colonne de direction muni de moyens de blocage du pene**
Lenksäulendiebstahlsicherung mit Mittel zur Bolzenverriegelung
Steering column antitheft device provided with locking pin blocking means

(30) Priorité: 20.06.2000 FR 0007824
(43) Date de publication de la demande: 02.01.2002
(73) Titulaire: VALEO SECURITE HABITACLE S.A.S., 94042 Créteil Cédex (FR)
(72) Inventeur: Touratier, Thierry, 95160 Montmorency (FR)
(74) Mandataire: Hervouet, Sylvie

(56) Documents cités:
- EP-A- 0 952 051
- EP-A- 0 995 648

## Description

La présente invention concerne un antivol de colonne de direction muni de moyens de blocage du pêne.

On connaît déjà dans l'état de la technique, notamment d'après FR-A-2 784 952 (EP-A-995 648), un antivol de colonne de direction, du type comportant
- des première et seconde parties reliées entre elles de façon frangible,
- un pêne monté coulissant longitudinalement dans la première partie de l'antivol entre une position saillante de coopération avec le contour d'un arbre de la colonne de direction et une position escamotée dans la première partie de l'antivol,
- un organe de blocage du pêne déplaçable, sous l'effet de la séparation des deux parties de l'antivol, entre une position d'attente écartée du pêne et une position active de coopération avec le pêne,
le pêne et l'organe de blocage comportant des moyens complémentaires d'emboîtement coopérant entre eux pour immobiliser le pêne en position escamotée et des moyens complémentaires de coincement coopérant entre eux pour immobiliser le pêne en position saillante en coinçant longitudinalement ce pêne entre le contour de l'arbre et l'organe de blocage.

Habituellement, la seconde partie de l'antivol comporte des moyens de commande des déplacements du pêne entre ses positions saillante et escamotée.

Dans le document ci-dessus, l'organe de blocage est monté déplaçable en translation, sensiblement perpendiculairement au pêne, dans la première partie de l'antivol. Les moyens complémentaires d'emboîtement comprennent une première encoche ménagée dans le pêne destinée à coopérer par emboîtement avec une extrémité libre de l'organe de blocage. Les moyens complémentaires de coincement comprennent une seconde encoche ménagée dans le pêne, délimitée par une face de coincement inclinée vers l'avant, destinée à coopérer avec l'extrémité libre de l'organe de blocage.

De façon classique, le pêne est destiné à immobiliser l'arbre de la colonne de direction par emboîtement dans une rainure longitudinale ménagée sur le contour de cet arbre. Habituellement, ce dernier comporte plusieurs rainures réparties angulairement sur son contour.

Lorsque le pêne est en position saillante de coopération avec le contour de l'arbre de colonne de direction, il est soit emboîté dans une rainure d'immobilisation de cet arbre, soit en contact avec une partie du contour de l'arbre, appelée dent, séparant deux rainures successives. Dans ce dernier cas l'arbre de colonne de direction n'est pas immobilisé en rotation. Toutefois, si le volant relié à l'arbre est manoeuvré, cet arbre est automatiquement immobilisé après une brève course angulaire de celui-ci ayant pour effet de placer une rainure au droit du pêne de façon à autoriser l'emboîtement de ce dernier dans cette rainure.

Lors de la séparation des deux parties de l'antivol (résultant notamment d'un choc subi par le véhicule ou d'une action malveillante de destruction de l'antivol), l'organe de blocage est destiné à immobiliser le pêne dans sa position occupée avant cette séparation.

Les moyens complémentaires d'emboîtement ménagés sur le pêne et l'organe de blocage permettent d'immobiliser le pêne en position escamotée correspondant à la libre rotation de l'arbre de colonne. Les moyens complémentaires de coincement ménagés sur le pêne et l'organe de blocage permettent d'immobiliser ce pêne en position saillante aussi bien lorsqu'il est emboîté dans une rainure de l'arbre que lorsqu'il est en contact avec une dent de cet arbre.

Dans FR-A-2 784 952 (EP-A-995 648), l'organe de blocage est commandé par une tige coulissante ou un levier séparé de celui-ci.

L'invention a pour but de proposer un organe de blocage au moins aussi efficace que celui décrit dans FR-A-2 784 952 et notamment plus simple à commander que celui de l'état de la technique.

A cet effet, l'invention a pour objet un antivol de colonne de direction, du type précité, caractérisé en ce que l'organe de blocage est monté rotatif dans la première partie de l'antivol, les moyens complémentaires de coincement comportant une came de coincement ménagée sur l'organe de blocage, dont le profil évolue dans le sens de rotation de cet organe de blocage, destinée à coopérer avec une extrémité du pêne.

Suivant d'autres caractéristiques de cet antivol:
- l'antivol comporte des moyens de rappel élastique de l'organe de blocage en position active ;
- les moyens de rappel élastique comprennent un ressort à effet angulaire ;
- l'antivol comprend deux butées complémentaires de retenue de l'organe de blocage en position d'attente, portées respectivement par cet organe de blocage et la seconde partie de l'antivol, sollicitées en appui l'une contre l'autre par les moyens de rappel élastique et séparables l'une de l'autre par déplacement radial relatif lors de la séparation des deux parties de l'antivol ;
- la butée de retenue portée par la seconde partie de l'antivol est formée par un commutateur électrique rotatif porté par cette seconde partie ;
- l'organe de blocage est monté rotatif dans la première partie de l'antivol autour d'un axe sensiblement orthogonal à la direction longitudinale du pêne, la came de coincement comportant un profil s'incurvant autour de l'axe de rotation ;
- la butée de retenue portée par l'organe de blocage est formée par un doigt solidaire de cet organe de blocage et sensiblement transversal à l'axe de rotation de cet organe de blocage ;
- l'organe de blocage est monté rotatif dans la première partie de l'antivol autour d'un axe sensiblement parallèle à la direction longitudinale du pêne, la came de coincement comportant un profil évoluant sensiblement en portion d'hélice autour de l'axe de rotation ;
- la butée de retenue portée par l'organe de blocage est formée par un doigt solidaire de cet organe de blocage et sensiblement parallèle à l'axe de rotation de cet organe de blocage ;
- les moyens complémentaires d'emboîtement comprennent une encoche ménagée dans le pêne destinée à coopérer par emboîtement avec au moins une partie de l'organe de blocage ;
- la seconde partie de l'antivol comporte des moyens de commande des déplacements du pêne entre ses positions saillante et escamotée.

L'invention sera mieux comprise à la lecture de la description qui va suivre, donnée uniquement à titre d'exemple et faite en se référant aux dessins dans lesquels :
- la figure 1 est une vue en coupe d'un antivol de colonne de direction selon un premier mode de réalisation de l'invention, suivant un plan parallèle à la direction longitudinale du pêne ;
- la figure 2 est une vue en coupe de l'antivol de la figure 1 suivant un plan transversal au pêne;
- les figures 3 et 4, 5 et 6, 7 et 8 sont des vues similaires aux figures 1 et 2 montrant l'antivol selon le premier mode de réalisation de l'invention après rupture partielle et séparation de ses deux parties, dans différentes positions du pêne ;
- la figure 9 est une vue en perspective partiellement coupée de l'organe de blocage de l'antivol selon le premier mode de réalisation de l'invention et des principaux éléments avec lesquels coopère cet organe de blocage ;
- la figure 10 est une vue similaire à la figure 1 montrant un antivol de colonne de direction selon un second mode de réalisation de l'invention ;
- les figures 11 à 13 sont des vues similaires aux figures 3, 5 et 7 montrant l'antivol selon le second mode de réalisation de l'invention après rupture partielle et séparation de ses deux parties, dans différentes positions du pêne ;
- la figure 14 est une vue similaire à la figure 9 montrant l'organe de blocage de l'antivol selon le second mode de réalisation de l'invention et les principaux éléments avec lesquels coopère cet organe de blocage ;

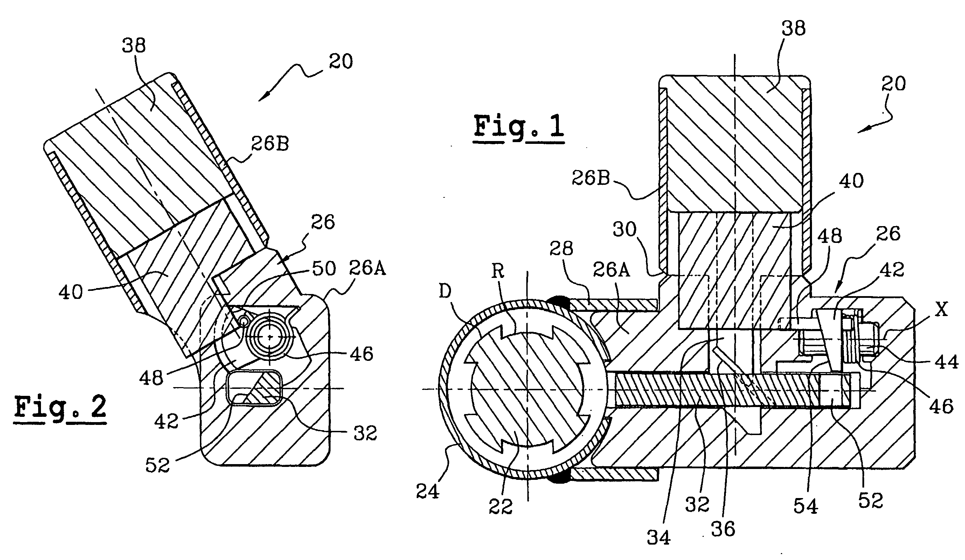

On a représenté sur les figures 1 à 9, un antivol de colonne de direction de véhicule automobile, selon un premier mode de réalisation de l'invention, désigné par la référence générale 20.

De façon classique, la colonne de direction comporte un arbre 22 logé dans un corps de colonne tubulaire 24.

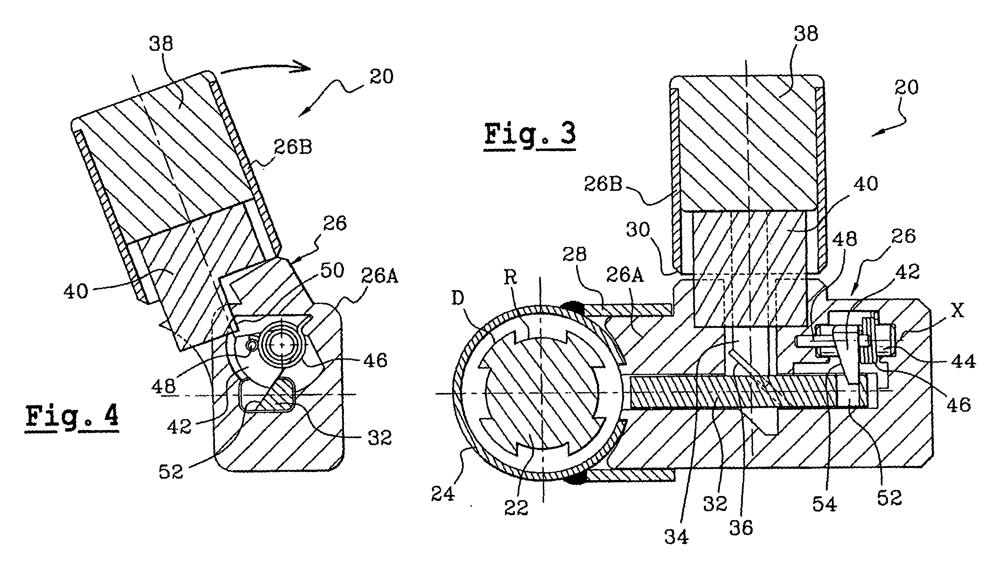

L'antivol 20 comporte un boîtier métallique 26, fabriqué par exemple en alliage moulé, relié par des moyens classiques 28 au corps de colonne 24. Ce boîtier 26 comporte des première 26A et seconde 26B parties venues de matière en une seule pièce mais reliées entre elles de façon frangible par une partie amincie 30 formant une amorce de rupture. En cas de choc, la partie amincie 30 permet la séparation partielle ou complète des deux parties 26A, 26B du boîtier, comme cela est illustré sur les figures 4 à 8, afin notamment d'éviter que la seconde partie 26B du boîtier constitue un obstacle susceptible de blesser un occupant du véhicule.

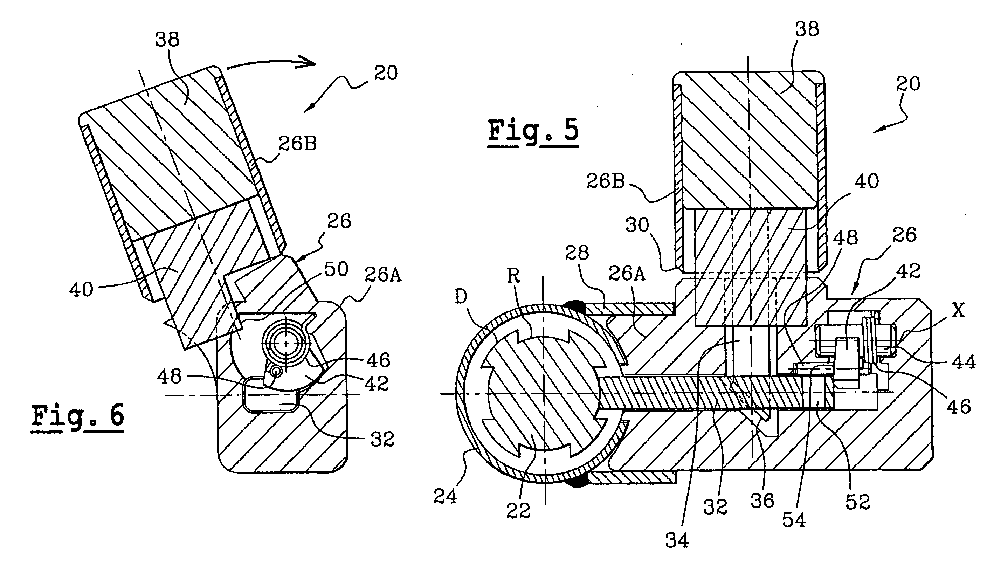

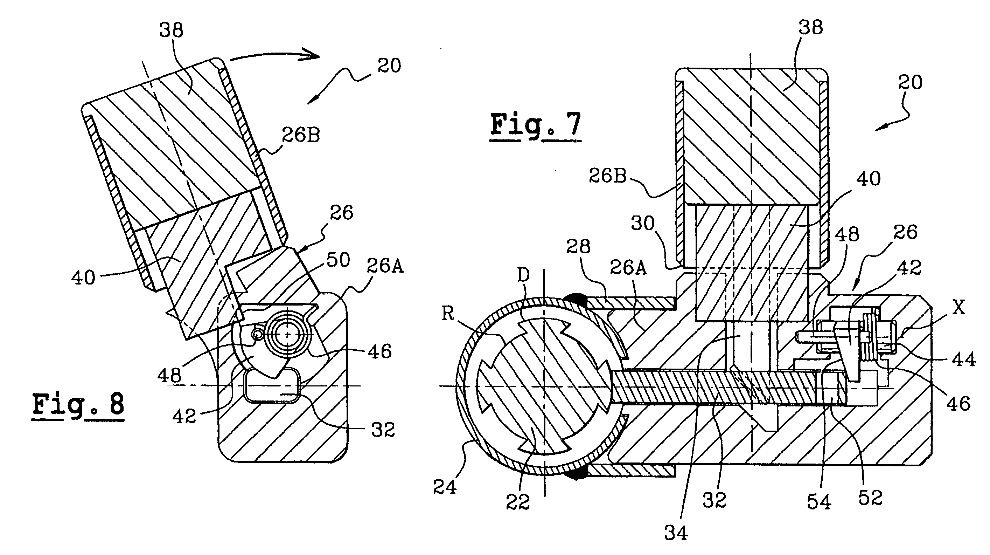

Un pêne 32, de forme générale allongée, est monté coulissant longitudinalement dans la première partie 26A du boîtier. Ce pêne 32 est déplaçable transversalement à l'arbre 22 de la colonne entre une position escamotée dans la première partie 26A du boîtier, comme cela est représenté sur les figures 1 et 3, et une position saillante de coopération avec le contour de l'arbre 22, comme cela est représenté sur les figures 5 et 7.

De façon classique, le pêne 32 est destiné à immobiliser l'arbre 22 de la colonne par emboîtement dans une rainure longitudinale R ménagée sur le contour de cet arbre 22. A cet effet, l'arbre 22 comporte plusieurs rainures R réparties angulairement sur son contour. Les parties du contour de l'arbre 22 séparant deux rainures successives sont appelées dents D.

Lorsque le pêne 32 est en position saillante de coopération avec le contour de l'arbre 22 de colonne, il est soit emboîté dans une rainure d'immobilisation R de cet arbre, comme cela est représenté sur la figure 5, soit en contact avec une dent D, comme cela est représenté sur la figure 7. Dans ce dernier cas, l'arbre 22 de colonne n'est pas immobilisé en rotation. Toutefois, comme cela est classique, si le volant relié à l'arbre 22 est manoeuvré, cet arbre est automatiquement immobilisé après une brève course angulaire de celui-ci ayant pour effet de placer une rainure R au droit du pêne 32 de façon à autoriser l'emboîtement de ce dernier dans cette rainure.

Les déplacements du pêne 32 entre ses positions escamotée et saillante sont commandés au moyen d'une tirette 34 agencée de façon connue en soi dans la seconde partie du boîtier, sensiblement transversalement au pêne 32. De façon classique, les déplacements de la tirette 34 sont transmis au pêne 32 par des moyens complémentaires 36 à rampe agencés sur la tirette 34 et le pêne 32.

Dans l'exemple illustré, la seconde partie 26B du boîtier comporte également un verrou rotatif 38 relié à la tirette 34 ainsi qu'un commutateur électrique 40 destiné notamment à commander un démarreur électrique du véhicule. Le verrou 38, accessible depuis l'habitacle, est habituellement actionné par une clé.

Un organe 42 de blocage du pêne 32 est monté rotatif dans la première partie du boîtier autour d'un axe géométrique X sensiblement parallèle à la direction longitudinale de ce pêne. L'axe X est matérialisé par une broche 44. L'organe de blocage 42 est immobilisé dans la direction de l'axe X.

Cet organe de blocage 42 est déplaçable, sous l'effet de la séparation des deux parties 26A,26B du boîtier, entre une position d'attente écartée du pêne 32, telle que représentée sur les figures 1, 2 et 9, et une position active de coopération avec ce pêne 32, telle que représentée sur les figures 3 à 8. L'organe de blocage 42 est rappelé élastiquement en position active par un ressort 46 à effet angulaire enroulé autour de la broche 44.

L'organe de blocage 42 est retenu en position d'attente à l'encontre de la force de rappel du ressort 46 par deux butées complémentaires 48, 50 portées respectivement par cet organe de blocage 44 et la seconde partie du boîtier 26B (voir notamment figure 2).

La butée de retenue 48 portée par l'organe de blocage 42 est formée par un doigt solidaire de cet organe de blocage et sensiblement parallèle à l'axe X. La butée de retenue 50 portée par la seconde partie 26B du boîtier est formée par exemple par le commutateur électrique 40.

Les butées de retenues sont sollicitées en appui l'une contre l'autre par le ressort à effet angulaire 46 et séparables l'une de l'autre par déplacement radial relatif lors de la rupture de la liaison frangible entre les deux parties 26A, 26B du boîtier, comme on peut le constater en comparant notamment les figures 2 et 4.

Le pêne 32 et l'organe de blocage 42 comportent des moyens complémentaires d'emboîtement coopérant entre eux pour immobiliser ce pêne en position escamotée, après séparation des deux parties 26A, 26B du boîtier, comme cela est représenté sur les figures 3 et 4. Ces moyens complémentaires d'emboîtement comprennent une encoche 52, ménagée dans le pêne 32, destinée à coopérer par emboîtement avec au moins une partie de l'organe de blocage 42.

Le pêne 32 et l'organe de blocage 42 comportent également des moyens complémentaires de coincement coopérant entre eux pour immobiliser ce pêne 32 en position saillante, après séparation des deux parties 26A, 26B du boîtier, comme cela est représenté sur les figures 6 à 8. Ces moyens complémentaires de coincement comprennent une came 54 destinée à coopérer avec l'extrémité du pêne 32 opposée à l'arbre 22 de la colonne pour coincer longitudinalement le pêne 32 entre le contour de l'arbre 22 et l'organe de blocage 42. La came de coincement 54 est ménagée sur l'organe de blocage 42 et présente un profil évoluant dans le sens de rotation de cet organe de blocage. Dans l'exemple illustré sur les figures 1 à 9, le profil de la came 54 évolue sensiblement en portion d'hélice autour de l'axe X.

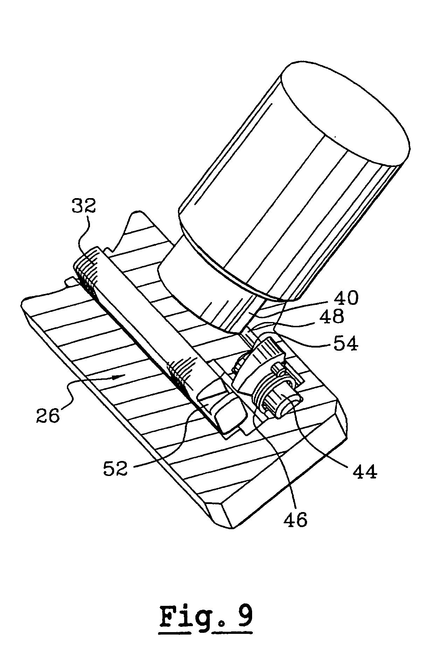

L'organe de blocage 42, la came de coincement 54 et l'encoche 52 sont représentés plus en détails sur la figure 9.

Le fonctionnement de l'organe de blocage 42 de l'antivol selon le premier mode de réalisation de l'invention est très simple.

Initialement, cet organe de blocage 42 est retenu en position d'attente par coopération des butées complémentaires 48, 50 comme cela est représenté sur les figures 1, 2 et 9. L'organe de blocage 42 est à l'écart du pêne 32.

Lors d'un choc provoquant la séparation partielle ou complète des deux parties 26A, 26B du boîtier, les butées de retenue 48, 50 se libèrent l'une de l'autre et l'organe de blocage 42 se déplace en position active sous l'effet de la force de rappel du ressort à effet angulaire 46 de façon à coopérer avec le pêne 32. Plusieurs cas se présentent selon la position relative du pêne 32 et de l'organe de blocage 42 avant la séparation des deux parties du boîtier.

### Premier cas illustré sur les figures 3 et 4.

Le pêne 32 est en position escamotée permettant la libre rotation de l'arbre 22 de la colonne. La trajectoire circulaire de l'organe de blocage 42 coïncide dans ce cas avec l'encoche 52 d'immobilisation du pêne de manière à permettre l'emboîtement partiel de l'organe de blocage 42 dans l'encoche 52 et l'immobilisation du pêne 32 dans sa position escamotée.

### Deuxième cas illustré sur les figures 5 et 6.

Le pêne 32 est en position saillante et est emboîté dans une rainure R du contour de l'arbre 22 de la colonne afin d'immobiliser cet arbre en rotation. L'organe de blocage 42 est alors susceptible de se déplacer transversalement au pêne 32 suivant une course circulaire maximale à la fin de laquelle la came de coincement 54 coopère avec l'extrémité du pêne opposée à l'arbre de la colonne pour coincer longitudinalement ce pêne entre le contour de l'arbre (fond de la rainure) et la came.

### Troisième cas illustré sur les figures 7 et 8.

Le pêne 32 est en position saillante en contact avec une dent D de l'arbre de la colonne. L'organe de blocage 42 est alors susceptible de se déplacer suivant une course circulaire plus courte qu'au deuxième cas à la fin de laquelle la came de coincement 54 coopère avec l'extrémité du pêne opposée à l'arbre de la colonne pour coincer longitudinalement ce pêne entre le contour de l'arbre (sommet de la dent) et la came.

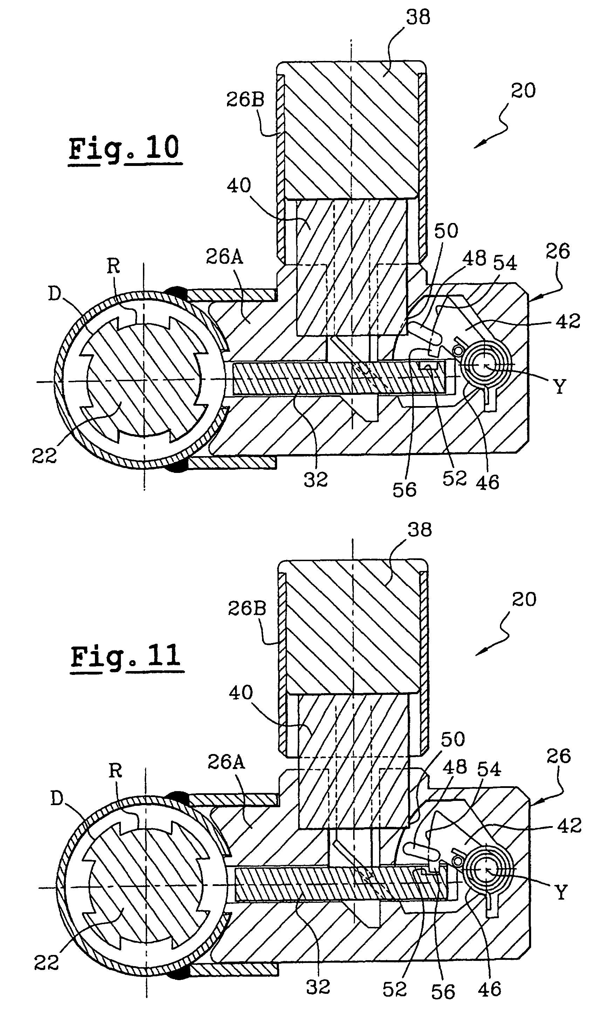

On a représenté sur les figures 10 à 14, un antivol de colonne de direction de véhicule automobile, selon un second mode de réalisation de l'invention, désigné par la référence générale 20. Sur ces figures, les éléments analogues à ceux des figures précédentes sont désignés par des références identiques.

Dans ce cas, l'organe de blocage 42 est monté rotatif dans la première partie 26A du boîtier autour d'un axe Y sensiblement orthogonal à la direction longitudinale du pêne 32, la came de coincement 54 présentant un profil s'incurvant autour de l'axe Y. La came de coincement 54 est délimitée à une de ses extrémités par une partie de l'organe de blocage formant un crochet 56

Par ailleurs, la butée de retenue 48 portée par l'organe de blocage 42 est formée par un doigt solidaire de cet organe de blocage et sensiblement transversal à l'axe Y.

Le fonctionnement de l'organe de blocage 42 de l'antivol selon le second mode de réalisation de l'invention est similaire à celui de l'antivol selon le premier mode de réalisation de l'invention.

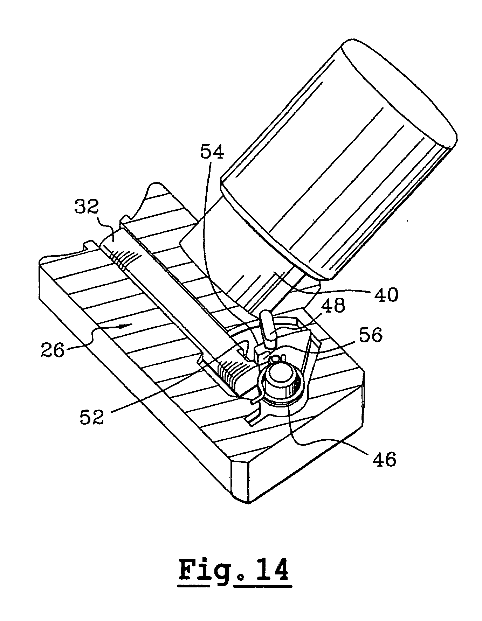

Initialement, cet organe de blocage 42 est retenu en position d'attente par coopération des butées complémentaires 48, 50 comme cela est représenté sur les figures 10 et 14.

Lors d'un choc provoquant la séparation partielle ou complète des deux parties 26A, 26B du boîtier, plusieurs cas se présentent selon la position relative du pêne 32 et de l'organe de blocage 42 avant cette séparation.

### Premier cas illustré sur la figure 11.

Le pêne 32 est en position escamotée permettant la libre rotation de l'arbre 22 de la colonne. La trajectoire circulaire du crochet 56 de l'organe de blocage coïncide dans ce cas avec l'encoche 52 d'immobilisation du pêne de manière à permettre l'emboîtement de ce crochet 56 dans l'encoche 52 et l'immobilisation du pêne 32 dans sa position escamotée.

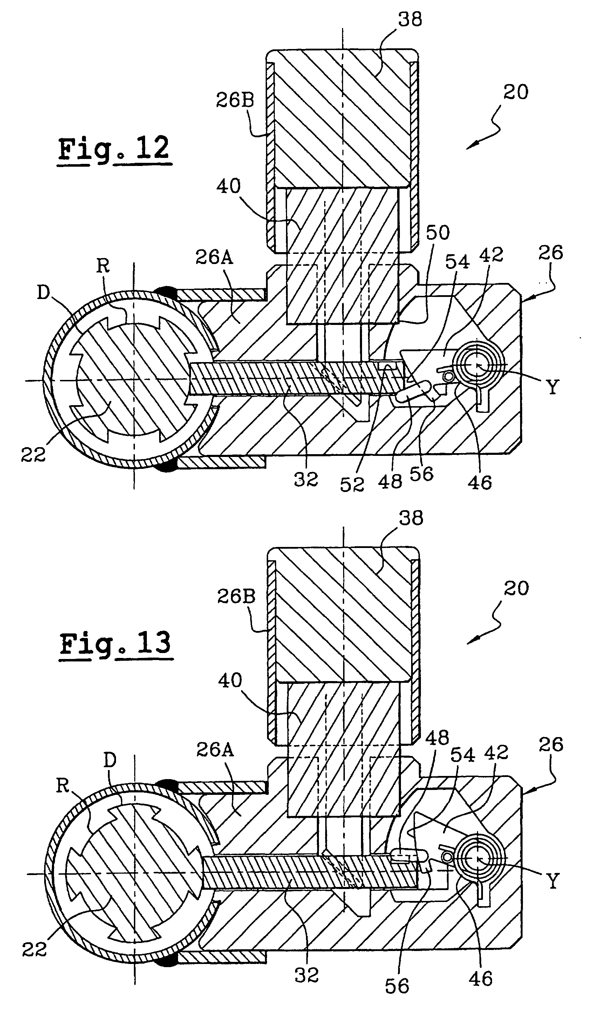

### Deuxième cas illustré sur la figure 12.

Le pêne 32 est en position saillante et est emboîté dans une rainure R du contour de l'arbre 22 de la colonne afin d'immobiliser cet arbre en rotation. L'organe de blocage 42 est alors susceptible de se déplacer parallèlement à la direction longitudinale du pêne 32 suivant une course circulaire maximale à la fin de laquelle la came de coincement 54 coopère avec l'extrémité du pêne opposée à l'arbre de la colonne pour coincer longitudinalement ce pêne entre le contour de l'arbre (fond de la rainure) et la came.

### Troisième cas illustré sur la figure 13.

Le pêne 32 est en position saillante en contact avec une dent D de l'arbre de la colonne. L'organe de blocage 42 est alors susceptible de se déplacer suivant une course circulaire plus courte qu'au deuxième cas à la fin de laquelle la came de coincement 54 coopère avec l'extrémité du pêne opposée à l'arbre de la colonne pour coincer longitudinalement ce pêne entre le contour de l'arbre (sommet de la dent) et la came.

Parmi les avantages de l'invention, on notera notamment que celle-ci permet de bloquer efficacement le pêne, après la séparation des deux parties du boîtier, au moyen d'un organe de blocage rotatif pouvant être commandé de façon très simple avec une butée de retenue solidaire de cet organe de blocage.

## Revendications

1. Antivol de colonne de direction, du type comportant
- des première (26A) et seconde (26B) parties reliées entre elles de façon frangible,
- un pêne (32) monté coulissant longitudinalement dans la première partie (26A) de l'antivol entre une position saillante de coopération avec le contour d'un arbre (22) de la colonne de direction et une position escamotée dans la première partie (26A) de l'antivol, et
- un organe (42) de blocage du pêne déplaçable, sous l'effet de la séparation des deux parties (26A, 26B) de l'antivol, entre une position d'attente écartée du pêne (32) et une position active de coopération avec le pêne (32),
le pêne (32) et l'organe (42) de blocage comportant des moyens complémentaires d'emboîtement (52) coopérant entre eux pour immobiliser le pêne (32) en position escamotée et des moyens complémentaires de coincement (54) coopérant entre eux pour immobiliser le pêne (32) en position saillante en coinçant longitudinalement ce pêne entre le contour de l'arbre et l'organe de blocage,
**caractérisé en ce que** l'organe de blocage (42) est monté rotatif dans la première partie (26A) de l'antivol, les moyens complémentaires de coincement comportant une came de coincement (54) ménagée sur l'organe de blocage (42), dont le profil évolue dans le sens de rotation de cet organe de blocage, destinée à coopérer avec une extrémité du pêne (32).

2. Antivol selon la revendication 1, **caractérisé en ce qu'**il comporte des moyens (46) de rappel élastique de l'organe de blocage en position active.

3. Antivol selon la revendication 2, **caractérisé en ce que** les moyens de rappel élastique comprennent un ressort (46) à effet angulaire.

4. Antivol selon la revendication 2 ou 3, **caractérisé en ce qu'**il comprend deux butées complémentaires (48, 50) de retenue de l'organe de blocage (42) en position d'attente, portées respectivement par cet organe de blocage (42) et la seconde partie (26B) de l'antivol, sollicitées en appui l'une contre l'autre par les moyens de rappel élastique (46) et séparables l'une de l'autre par déplacement radial relatif lors de la séparation des deux parties (26A, 26B) de l'antivol.

5. Antivol selon la revendication 4, **caractérisé en ce que** la butée de retenue (50) portée par la seconde partie (26B) de l'antivol est formée par un commutateur électrique rotatif (40) porté par cette seconde partie.

6. Antivol selon l'une quelconque des revendications 1 à 5, **caractérisé en ce que** l'organe de blocage (42) est monté rotatif dans la première partie (26A) de l'antivol autour d'un axe (Y) sensiblement orthogonal à la direction longitudinale du pêne, la came de coincement (54) comportant un profil s'incurvant autour de l'axe de rotation.

7. Antivol selon les revendications 4 et 6 prises ensemble, **caractérisé en ce que** la butée de retenue (48) portée par l'organe de blocage (42) est formée par un doigt solidaire de cet organe de blocage et sensiblement transversal à l'axe de rotation (Y) de cet organe de blocage.

8. Antivol selon l'une quelconque des revendications 1 à 5, **caractérisé en ce que** l'organe de blocage (42) est monté rotatif dans la première partie (26A) de l'antivol autour d'un axe (X) sensiblement parallèle à la direction longitudinale du pêne, la came de coincement (54) comportant un profil évoluant sensiblement en portion d'hélice autour de l'axe de rotation.

9. Antivol selon les revendications 4 et 8 prises ensemble, **caractérisé en ce que** la butée de retenue (48) portée par l'organe de blocage (42) est formée par un doigt solidaire de cet organe de blocage et sensiblement parallèle à l'axe de rotation (X) de cet organe de blocage.

10. Antivol selon l'une quelconque des revendications précédentes, **caractérisé en ce que** les moyens complémentaires d'emboîtement comprennent une encoche (52) ménagée dans le pêne (32) destinée à coopérer par emboîtement avec au moins une partie de l'organe de blocage (42).

11. Antivol selon l'une quelconque des revendications précédentes, **caractérisé en ce que** la seconde partie (26B) de l'antivol comporte des moyens (34) de commande des déplacements du pêne (32) entre ses positions saillante et escamotée.

## Claims

1. A steering column anti-theft device of the type comprising
- first (26A) and second (26B) parts connected together breakably,
- a bolt (32) mounted so as to slide longitudinally in the first part (26A) of the anti-theft device between a projecting positiun of cooperation with the contour of a shaft (22) of the steering column and a position retracted in the first part (26A) of the anti-theft device, and
- a member (42) for locking the movable bolt, under the effect of the separation of the two parts (26A, 26B) of the anti-theft device, between a waiting position away from the bolt (32) and an active position of cooperation with the bolt (32),
the bolt (32) and the locking member (42) comprising complementary fitting-together means (52) cooperating with each other in order to immobilise the bolt (32) in the retracted position and complementary wedging means (54) cooperating with each other in order to immobilise the bolt (32) in the projecting position by longitudinally wedging this bolt between the contour of the shaft and the locking member,
**characterised in that** the locking member (42) is mounted so as to rotate in the first part (26A) of the anti-theft device, the complementary wedging means comprising a wedging cam (54) provided on the locking member (42) whose profile changes in the direction of rotation of this locking member, intended to cooperate with one end of the bolt (32).

2. An anti-theft device according to Claim 1, **characterised in that** it comprises means (46) of elastic return of the locking member to the active position.

3. An anti-theft device according to Claim 2, **characterised in that** the elastic return means comprise an angular-effect spring (46).

4. An anti-theft device according to Claim 2 or 3, **characterised in that** it comprises two complementary stops (48, 50) for retaining the locking member (42) in the waiting position, carried respectively by this locking member (42) and the second part (26B) of the anti-theft device, forced in abutment against each other by the elastic return means (46) and separable from each other by relative radial movement when the two parts (26A, 26B) of the anti-theft device are separated.

5. An anti-theft device according to Claim 4, **characterised in that** the retaining stop (50) carried by the second part (26B) of the anti-theft device is formed by a rotary electrical switch (40) carried by this second part.

6. An anti-theft device according to any one of Claims 1 to 5, **characterised in that** the locking member (42) is mounted so as to rotate in the first part (26A) of the anti-theft device about an axis (Y) substantially orthogonal to the longitudinal direction of the bolt, the wedging cam (54) comprising a profile curving around the axis of rotation.

7. An anti-theft device according to Claims 4 and 6 taken together, **characterised in that** the retaining stop (48) carried by the locking member (42) is formed by a finger fixed to this locking member and substantially transverse to the axis of rotation (Y) of this locking member.

8. An anti-theft device according to any one of Claims 1 to 5, **characterised in that** the locking member (42) is mounted so as to rotate in the first part (26A) of the anti-theft device about an axis (X) substantially parallel to the longitudinal direction of the bolt, the wedging cam (54) comprising a profile changing substantially in a portion of a helix about the axis of rotation.

9. An anti-theft device according to Claims 4 and 8 taken together, **characterised in that** the retaining stop (48) carried by the locking member (42) is formed by a finger fixed to this locking member and substantially parallel to the axis of rotation (X) of this locking member.

10. An anti-theft device according to any one of the preceding claims, **characterised in that** the complementary fitting-together means comprise a recess (52) provided in the bolt (32) intended to cooperate by fitting together with at least part of the locking member (42).

11. An anti-theft device according to any one of the preceding claims, **characterised in that** the second part (26B) of the anti-theft device comprises means (34) of controlling movements of the bolt (32) between its projecting and retracted positions.

## Patentansprüche

1. Lenksäulendiebstahlsicherung, vom Typ mit
- einem ersten Teil (26A) und einem zweiten Teil (26B), die durch eine Bruchstelle miteinander verbunden sind,
- einem Riegel (32), der im ersten Teil (26A) der Diebstahlsicherung zwischen einer vorspringenden Stellung zum Zusammenwirken mit der Kontur einer Welle (22) der Lenksäule und einer in das erste Teil (26A) der Diebstahlsicherung wegbewegten Stellung in Längsrichtung gleitbeweglich gelagert ist, und
- einem Riegelarretierglied (42), das unter der Wirkung der Trennung der beiden Teile (26A, 26B) der Diebstahlsicherung zwischen einer vom Riegel entfernt liegenden Wartestellung und einer Aktivstellung zum Zusammenwirken mit dem Riegel (32) verlagerbar ist,
wobei der Riegel (32) und das Arretierglied (42) komplementäre Eingreifmittel (52) enthalten, die miteinander zusammenwirken, um den Riegel (32) in wegbewegter Stellung festzulegen, sowie komplementäre Klemmmittel (54), die miteinander zusammenwirken, um den Riegel (32) in vorspringender Stellung festzulegen, indem sie diesen Riegel in Längsrichtung zwischen der Kontur der Welle und dem Arretierglied einklemmen,
**dadurch gekennzeichnet, dass** das Arretierglied (42) im ersten Teil (26A) der Diebstahlsicherung drehbar gelagert ist, wobei die komplementären Klemmmittel einen Klemmnocken (54) enthalten, der am Arretierglied (42) ausgebildet ist, sich mit seinem Profil in Drehrichtung dieses Arretierglieds bewegt und dazu bestimmt ist, mit einem Ende des Riegels (32) zusammenzuwirken.

2. Diebstahlsicherung nach Anspruch 1, **dadurch gekennzeichnet, dass** sie Rückstellmittel (46) zum elastischen Rückstellen des Arretierglieds in die Aktivstellung enthält.

3. Diebstahlsicherung nach Anspruch 2, **dadurch gekennzeichnet, dass** die elastischen Rückstellmittel eine Feder (46) mit Winkelwirkung enthalten.

4. Diebstahlsicherung nach Anspruch 2 oder 3, **dadurch gekennzeichnet, dass** sie zwei komplementäre Anschläge (48, 50) zum Festhalten des Arretierglieds (42) in Wartestellung enthält, die jeweils von diesem Arretierglied (42) bzw. vom zweiten Teil (26B) der Diebstahlsicherung getragen werden, über elastische Rückstellmittel (46) in Anlage aneinander beaufschlagt werden und bei Trennung der beiden Teile (26A, 26B) der Diebstahlsicherung durch relative radiale Verlagerung voneinander trennbar sind.

5. Diebstahlsicherung nach Anspruch 4, **dadurch gekennzeichnet, dass** der vom zweiten Teil (26B) der Diebstahlsicherung getragene Halteanschlag (50) aus einem elektrischen Drehschalter (40) gebildet ist, der von diesem zweiten Teil getragen wird.

6. Diebstahlsicherung nach einem der Ansprüche 1 bis 5, **dadurch gekennzeichnet, dass** das Arretierglied (42) im ersten Teil (26A) der Diebstahlsicherung um eine Achse (Y) herum drehbar gelagert ist, die im wesentlichen orthogonal zur Längsrichtung des Riegels verläuft, wobei der Klemmnocken (54) ein Profil aufweist, das um die Drehachse herumgebogen ist.

7. Diebstahlsicherung nach Anspruch 4 und 6 zusammengenommen, **dadurch gekennzeichnet, dass** der vom Arretierglied (42) getragene Halteanschlag (48) aus einem Finger gebildet ist, der fest mit diesem Arretierglied verbunden ist und im wesentlichen quer zur Drehachse (Y) dieses Arretierglieds verläuft.

8. Diebstahlsicherung nach einem der Ansprüche 1 bis 5, **dadurch gekennzeichnet, dass** das Arretierglied (42) im ersten Teil (26A) der Diebstahlsicherung um eine Achse (X) herum drehbar gelagert ist, die im wesentlichen parallel zur Längsrichtung des Riegels verläuft, wobei der Klemmnocken (54) ein Profil aufweist, das sich im wesentlichen schraubenabschnittsartig um die Drehachse erstreckt.

9. Diebstahlsicherung nach Anspruch 4 und 8 zusammengenommen, **dadurch gekennzeichnet, dass** der vom Arretierglied (42) getragene Halteanschlag (48) aus einem Finger gebildet ist, der fest mit diesem Arretierglied verbunden ist und im wesentlichen parallel zur Drehachse (X) dieses Arretierglieds verläuft.

10. Diebstahlsicherung nach einem der vorangehenden Ansprüche, **dadurch gekennzeichnet, dass** die komplementären Eingreifmittel eine Aussparung (52) enthalten, die im Riegel (32) ausgebildet und dazu bestimmt ist, mit zumindest einem Teil des Arretierglieds (42) durch Eingreifen zusammenzuwirken.

11. Diebstahlsicherung nach einem der vorangehenden Ansprüche, **dadurch gekennzeichnet, dass** das zweite Teil (26B) der Diebstahlsicherung Mittel (34) zum Steuern der Verlagerungen des Riegels (32) zwischen seiner vorspringenden und seiner wegbewegten Stellung enthält.
